# EUROPÄISCHE PATENTANMELDUNG

(11) **EP 1 280 096 A2**
(43) Veröffentlichungstag der Anmeldung: **29.01.2003**
(21) Anmeldenummer: 02102017.7
(22) Anmeldetag: 09.07.2002
(51) Int. Cl.: G06K 9/64

(54) **Verfahren zum Ähnlichkeitsvergleich von zwei aus Polygonzügen aufgebauten, digitalen Bildern**

(30) Priorität: 23.07.2001 DE 10135817
(71) Anmelder: SIEMENS AKTIENGESELLSCHAFT, 80333 München (DE)
(72) Erfinder: Egger, Robert, 8605, Kapfenberg (AT); Haselsteiner, Ernst, 8010, Graz (AT); Hribernig, Gerd, 8046, Graz (AT); Heschgl, Kurt, 8010, Graz (AT); Marius, Wolfgang, 8043, Graz/Kroisbach (AT); Raunegger, Arno, 8010, Graz (AT); Windisch, Claudia, 8565, St. Johann o. H. (AT)

(57) **Zusammenfassung**

Die Erfindung betrifft ein Verfahren und eine Vorrichtung zum Ähnlichkeitsvergleich von zwei aus Polygonzügen (PO1, PO2) aufgebauten digitalen Bildern (BI1, BI2), wobei zur Bestimmung der Ähnlichkeit der beiden Bilder jeder Polygonzug (PO1, PO2) des einen Bildes (BI1, BI2) mit jedem Polygonzug (PO1, PO2) des anderen Bildes (BI1, BI2) mittels Rotations- und Translationsoperationen auf Deckungsgleichheit verglichen wird.

## Beschreibung

Die Erfindung betrifft ein Verfahren zum Ähnlichkeitsvergleich von zwei aus Polygonzügen aufgebauten, digitalen Bildern.

Weiters betrifft die Erfindung eine Vorrichtung zum Ähnlichkeitsvergleich von zwei aus Polygonzügen aufgebauten, digitalen Bildern.

Der Vergleich von Bildern auf Ähnlichkeit bzw. die Erkennung und der Vergleich von Mustern haben in den letzten Jahren wesentlich an Bedeutung gewonnen. Vor allem hinsichtlich der Erkennung von Fingerandrücken ist die Mustererkennung von großer Wichtigkeit.

In Zusammenhang mit dem Vergleich von Bildern bzw. Mustern sind eine große Anzahl von Verfahren und Vorrichtungen bekannt geworden. So beschreibt beispielsweise die EP 0 128 820 B2 ein Mustererkennungsverfahren, bei welchem von dem Bild eines Objektes eine Folge von Mustern von vorbestimmter Größe und Form extrahiert werden, welche für aufeinanderfolgende Abschnitte des Bildes repräsentativ sind, wobei diese Muster mit einem vorausgewählten Hauptmuster verglichen wird. Zum Vergleich der Muster mit dem Hauptmuster wird die Wellenform des Musterübereinstimmungsgrades für jede der verglichenen Positionen berechnet, wobei sich die Wellenform auf eine Verschiebung eines extrahierten Musters entlang der x- oder y-Koordinate bezieht.

Nachteilig an diesem Verfahren ist vor allem der damit verbundene hohe Rechenaufwand.

Es ist daher eine Aufgabe der Erfindung einen einfach zu realisierenden Weg zu schaffen, der es ermöglicht mit geringem Rechenaufwand einen Mustervergleich durchzuführen.

Diese Aufgabe wird mit einem Verfahren der eingangs genannten Art erfindungsgemäß dadurch gelöst, dass zur Bestimmung der Ähnlichkeit der beiden Bilder jeder Polygonzug des einen Bildes mit jedem Polygonzug des anderen Bildes mittels Rotations- und Translationsoperationen auf Deckungsgleichheit verglichen wird.

Aufgrund der relativ einfachen Operationen Rotation und Translation können die Polygonzüge innerhalb kurzer Zeit miteinander verglichen werden, wobei anhand der verwendeten Operationen, für den Fall, dass sich die beiden Bilder sehr ähnlich sind bzw. gleichen, zumindest ein Weg angegeben werden kann, auf welchem sich eine Kongruenz der beiden Bilder erreichen lässt.

Eine bevorzugte Ausführungsform der Erfindung sieht vor, dass untersucht wird, ob sich die Endpunkte zumindest eines Polygons des ersten Bildes mit den Endpunkten zumindest eines Polygons des zweiten Bildes im Rahmen einer vorgebbaren Abweichung mittels Rotations- oder Translationsoperationen zur Deckung bringen lassen.

Als Maß für die Ähnlichkeit zweier Polygonzüge, wird der Betrag der Fläche, welche von zwei Polygonzügen begrenzt wird, deren Endpunkte miteinander zur Deckung gebracht sind, berechnet, wobei der Betrag der Fläche anhand der mittleren Länge der beiden sie begrenzenden Polygonzüge normiert wird.

Vorteilhafterweise wird jede Kombination von Rotations- und Translationsoperationen, die einen Polygonzug des einen Bildes mit einem Polygonzug des anderen Bildes im Rahmen einer vorgebbaren Abweichung zur Deckung bringen, aufgezeichnet.

In einer vorteilhaften Variante der Erfindung bilden die aufgezeichneten Kombinationen von Translationen und Rotationen eine Untermenge bzw. Punkte eines Raumes von möglichen Rotations- und Translationsoperationen, wobei in dem Raum der möglichen Rotations- und Translationsoperationen nach Clustern der Untermengen bzw. der Punkte gesucht wird.

Zum Auffinden eines Clusters kann der Raum der möglichen Rotations- und Translationsoperationen in zumindest ein Gitter, bestehend aus Elementarzellen mit vorgebbaren Volumen unterteilt und diejenige Elementarzelle bestimmt werden, in der sich die meisten Punkte befinden.

Weitere Vorteile lassen sich dadurch erzielen, dass der Raum der möglichen Rotations- und Translationsoperationen in ein erstes Gitter unterteilt wird und eine erste Elementarzelle, in welcher sich die meisten Punkte befinden, bestimmt wird, und dass der Raum der möglichen Rotations- und Translationsoperationen in zweites Gitter unterteilt wird, dessen Elementarzellen die gleiche Form und das gleiche Volumen wie die Elementarzellen des ersten Gitters aufweisen, wobei der Mittelpunkt einer Elementarzelle des zweiten Gitters in einem Berührungspunkt von zumindest sechs Elementarzellen des ersten Gitters liegt und in dem zweiten Gitter ebenfalls die Elementarzelle ermittelt wird, in welcher sich die meisten Punkte befinden.

Hierauf können die beiden Elementarzellen, welche in ihrem jeweiligen Gitter die meisten Punkte enthalten miteinander verglichen werden und die Ortskoordinaten bzw. die Lage des Mittelpunktes der Elementarzelle, welche die größere Anzahl von Punkten enthält, in dem Raum der möglichen Rotations- und Translationsoperationen ermittelt werden.

Wurde ein Cluster von Punkten bzw. Untermengen identifiziert, kann der größte Durchmesser dieses Clusters bestimmt werden.

Weiters kann die Dichte der Punkte in diesem Cluster bestimmt werden.

Zur Durchführung des erfindungsgemäßen Verfahrens eignet sich insbesondere eine Vorrichtung der eingangs genannten Art, welche dazu eingerichtet ist, zur Bestimmung der Ähnlichkeit der beiden Bilder jeden Polygonzug des einen Bildes mit jedem Polygonzug des anderen Bildes mittels Rotations- und Translationsoperationen auf Deckungsgleichheit zu vergleichen.

Eine bevorzugte Variante der Erfindung sieht vor, dass die Vorrichtung dazu eingerichtet ist, zu untersuchen, ob sich die Endpunkte zumindest eines Polygons des ersten Bildes mit den Endpunkten zumindest eines Polygons des zweiten Bildes im Rahmen einer vorgebbaren Abweichung mittels Rotations- oder Translationsoperationen zur Deckung bringen lassen.

Vorteilhafterweise ist die Vorrichtung dazu eingerichtet, den Betrag der Fläche, welche von zwei Polygonzügen begrenzt wird, deren Endpunkte miteinander zur Deckung gebracht sind, zu berechnen, wobei die Vorrichtung weiters dazu eingerichtet sein kann, den Betrag der Fläche anhand der mittleren Länge der beiden sie begrenzenden Polygonzüge zu normieren.

Darüber hinaus kann die Vorrichtung dazu eingerichtet sein, jede Kombination von Rotations- und Translationsoperationen, die einen Polygonzug des einen Bildes mit einem Polygonzug des anderen Bildes im Rahmen einer vorgebbaren Abweichung zur Deckung bringen, aufzuzeichnen.

Weitere Vorteile lassen sich dadurch erzielen, dass die Vorrichtung dazu eingerichtet ist, zur Bestimmung eines Clusters von Punkten den Raum der möglichen Rotations- und Translationsoperationen in zumindest ein Gitter, bestehend aus Elementarzellen mit vorgebbaren Volumen, zu unterteilen und diejenige Elementarzelle zu bestimmen, in welcher sich die meisten Punkte befinden.

Günstigerweise kann die Vorrichtung dazu eingerichtet sein, aus den aufgezeichneten Kombinationen von Translationen und Rotationen eine Untermenge bzw. Punkte eines Raumes von möglichen Rotations- und Translationsoperationen zu bilden, und in dem Raum der möglichen Rotations- und Translationsoperationen nach Clustern dieser Untermengen bzw. dieser Punkte zu suchen.

Darüber hinaus kann die Vorrichtung dazu eingerichtet sein, den Raum der möglichen Rotations- und Translationsoperationen in ein erstes Gitter zu unterteilen und eine Elementarzelle dieses Gitters, in welcher sich die meisten Punkte befinden, zu bestimmen, und dass sie weiters dazu eingerichtet ist, den Raum der möglichen Rotations- und Translationsoperationen in ein zweites Gitter zu unterteilen, dessen Elementarzellen die gleiche Form und das gleiche Volumen wie die Elementarzellen des ersten Gitters aufweisen, wobei der Mittelpunkt einer Elementarzelle des zweiten Gitters in einem Berührungspunkt von zumindest sechs Elementarzellen des ersten Gitters liegt und in dem zweiten Gitter ebenfalls diejenige Elementarzelle zu ermitteln, in welcher sich die meisten Punkte befinden.

Vorteilhafterweise ist die Vorrichtung dazu eingerichtet, die beiden Elementarzellen, welche in ihrem jeweiligen Gitter die meisten Punkte enthalten miteinander zu vergleichen und die Ortskoordinaten bzw. die Lage des Mittelpunktes derjenigen der beiden Elementarzellen, welche die größere Anzahl von Punkten enthält, in dem Raum der möglichen Rotations- und Translationsoperationen zu ermitteln.

Eine weitere günstige Variante der Erfindung sieht vor, dass die Vorrichtung dazu eingerichtet ist, den größten Durchmesser eines Clusters zu bestimmen.

Auch kann die Vorrichtung dazu eingerichtet sein, die Dichte der Punkte in einem Cluster zu bestimmen.

Die Erfindung samt weiterer Vorteile wird im folgenden anhand einiger nicht einschränkender Ausführungsbeispiele, die in der Zeichnung veranschaulicht sind, schematisch dargestellt. In dieser zeigen:
Fig. 1 zwei aus Polygonzügen aufgebaute Bilder;
Fig. 2 zwei miteinander verglichene Polynome, deren Endpunkte zur Deckung gebracht sind,
Fig. 3 einen Raum von möglichen Rotations- und Translationsoperationen;
Fig. 4 den Raum aus Fig. 3 unterteilt in ein Gitter von Elementarzellen;
Fig. 5 eine Projektion zweier übereinander gelegter Gitter zur Unterteilung des Raumes in die X, Y-Ebene und
Fig. 6 eine erfindungsgemäße Vorrichtung zum Ähnlichkeitsvergleich von Bildern.

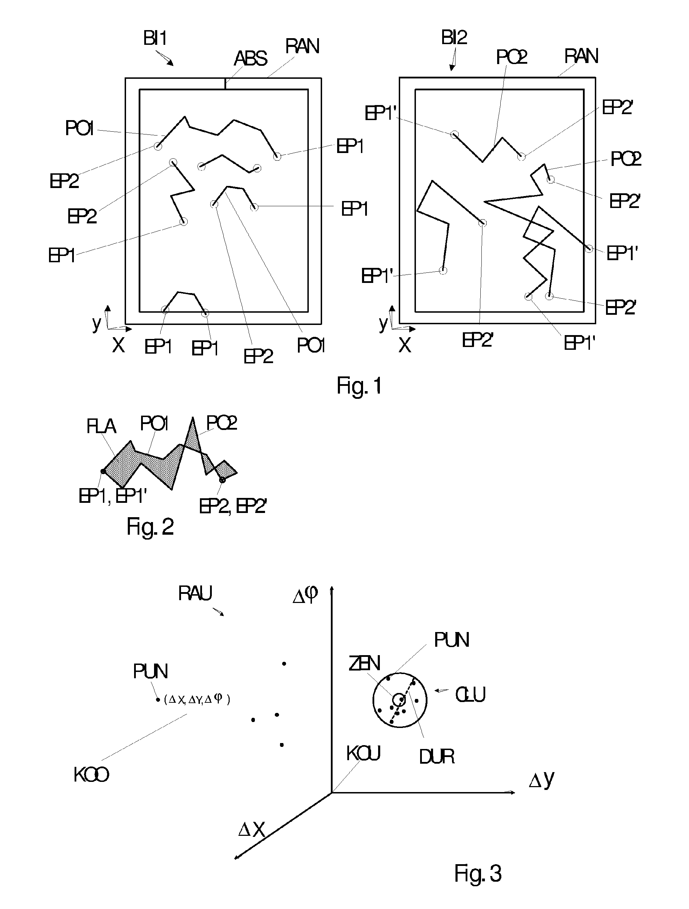

Gemäß Fig. 1 weisen zwei miteinander zu vergleichende, digitale Bilder BI1, BI2 als wesentliches Gestaltungsmerkmal Polygonzüge PO1, PO2 auf. Üblicherweise liegt ein allgemeines Bild jedoch nicht in dieser Form vor, sodass eine Transformation des Bildes auf die gewünschte Form durchgeführt werden muss.

Zur Transformation eines allgemeinen digitalen Bildes, in ein Bild BI1, BI2 von Polygonzügen sind zahlreiche Verfahren bekannt geworden.

Ein mögliches Verfahren zur Reduzierung eines allgemeinen digitalen Bildes, beispielsweise eines Fingerabdruckes oder einer Planzeichnung, auf eine Darstellung, in welcher dieses in Form von Polygonzügen PO1, PO2 vorliegt, besteht darin eine morphologische Erosion (Ausdünnung der Linien des allgemeinen Bildes) durchzuführen. Dabei werden von schwarzen Bereichen des allgemeinen Bildes vom Rand aus Pixel durch weiße Pixel ersetzt, wobei die Randbedingung gilt, dass der Zusammenhang schwarzer Gebiete nicht verletzt werden darf. Am Ende dieses Prozesses liegen Pixelketten minimaler Dicke vor, die an ihren Endpunkten entweder blind enden, oder sich verzweigen.

Zur Bestimmung der Polygonzüge PO1, PO2 aus den Pixelketten kann beispielsweise ein rekursives Verfahren angewendet werden.

Hierbei wird eine Pixelkette zunächst durch eine Gerade approximiert, die durch die beiden Endpunkte der Pixelkette gegeben ist. Dann wird der Normalabstand eines Pixels der Pixelkette von dieser Geraden bestimmt und als Abweichung bewertet. Ist diese Abweichung größer als eine vorgebbare Schranke, wird die Pixelkette ( und das betroffene Segment des Polygons) an dieser Stelle in zwei Teile geteilt. Der Prozess wird rekursiv für jeden Teil der Pixelkette wiederholt. Dadurch wird gewährleistet, dass kein Pixel der Kette einen größeren Normalabstand von dem approximierten Polygonzug PO1, PO2 hat, als durch die Schranke vorgegeben ist.

Alternativ zu dem soeben beschriebenen Verfahren können natürlich weitere dem Fachmann bekannte Verfahren zur Reduzierung des Informationsgehaltes eines Bildes auf eine polygonalisierte Darstellung verwendet werden.

Jeder Polygonzug PO1, PO2 nimmt innerhalb eines Bildes BI1, BI2 eine absolute Position ein. D. h. seine Relativlage zu den anderen Polygonzügen PO1, PO2 seines Bildes BI1, BI2 ist unabhängig von einer Rotation bzw. Translation dieses Bildes BI1, BI2.

Um die beiden Bilder BI1, BI2 miteinander zu vergleichen, kann daher eine willkürliche Ausgangslage in einem Koordinatensystem X, Y definiert werden, von der aus die Rotationsund Translationsoperationen gezählt werden, welche notwendig sind, die beiden Bilder BI1, BI2 gegebenenfalls zur Deckung zu bringen.

Diese durch die Relativlage der beiden Bilder BI1, BI2 zueinander definierte, willkürliche Ausgangsposition bildet den Koordinatenursprung eines weiter unten näher beschriebenen Raumes der möglichen Rotations- und Translationsoperationen. D. h. alle Rotations- und Translationsoperationen werden in Bezug auf die relativen Ausgangspositionen der beiden Bilder BI1, BI2 zueinander ermittelt.

Unter der Annahme, dass zwei Polygonzüge PO1, PO2 einander nur dann ähnlich sein können, wenn sich ihre Endpunkte EP1, EP1', EP2, EP2' im Rahmen einer vorgebbaren Fehlertoleranz durch Kombination einer Translation und Rotation zur Deckung bringen lassen, lässt sich der Rechenaufwand erheblich reduzieren.

Es kann der Fall sein, dass Polygonzüge PO1, PO2, am Bildrand RAN oder sehr nahe am Bildrand RAN enden, sodass nicht mit Sicherheit gesagt werden kann, ob es sich um den tatsächlichen Endpunkt EP1, EP1', EP2, EP2' eines Polygonzuges PO1, PO2 oder um ein Artefakt handelt. Um einem am Bildrand RAN endenden Polygonzug PO1, PO2 nicht fälschlicherweise einen durch den Bildrand RAN bedingten, falschen Endpunkt EP1, EP1', EP2, EP2' zuzuordnen und somit die Berechnung zu verfälschen - es kann keine sichere Aussage über die tatsächliche Lage des Endpunktes EP1', EP2' gemacht werden, da ja die Kenntnis über den Verlauf des Polygonzuges PO1, PO2 außerhalb des Bildes BI1' fehlt - werden Endpunkte EP1, EP2, deren kürzester Abstand ABS zu einem Bildrand RAN einen vorgebbaren Betrag unterschreitet, in der Berechnung nicht berücksichtigt. D. h. Polygonzüge PO1, PO2, deren Endpunkte EP1, EP1', EP2, EP2' zu nahe bei einem Bildrand RAN liegen werden nicht mit Polygonzügen PO1, PO2 des anderen Bildes BI2, BI2 verglichen.

Ist eine Korrespondenz - die Deckungsgleichheit der Endpunkte EP1, EP1', EP2, EP2'- zwischen den Polygonzügen PO1, PO2 herstellbar, ist gemäß Fig. 2 die Summe der Beträge der Flächen FLA, welche von einer geschlossenen Kurve, die aus den beiden miteinander verglichenen Polygonzügen PO1, PO2 besteht, bestrichen wird ein Maß für die Ähnlichkeit der beiden Polygonzüge PO1, PO2. Die Fläche FLA ist nur dann Null, wenn die beiden Polygonzüge PO1, PO2 ident sind. Um ein für alle verglichenen Polygonzüge PO1, PO2 vergleichbares Ähnlichkeitsmaß zu haben, wird der Betrag der von den beiden Polygonen PO1, PO2 begrenzten Fläche FLA an dem Mittel der Längen LAE der beiden Polygone PO1, PO2 normiert, d. h. der Betrag der Fläche FLA wird durch die mittlere Länge der beiden Polygone dividiert.

Liegt die Fläche FLA unter einer vorgebbaren Schranke, so können die beiden Polygonzüge PO1, PO2 als einander ähnlich angesehen werden.

Gemäß Fig. 3 bildet die Gesamtheit der Kombinationen von Rotationen Δϕ und Translationen Δ*X*,Δ*Y*, die zu einer Deckung von Paaren von Polygonzügen PO1, PO2 führen eine Verteilung von Matchhypothesen in einem Raum RAU der möglichen Translationen Δ*X*,Δ*Y* und Rotationen Δϕ, wobei jeder Matchhypothese eine Untermenge bzw. ein Punkt PUN in dem Raum RAU entspricht. Die Koordinaten KOO eines Punktes PUN geben dabei die Translations- Δ*X*,Δ*Y* und Rotationsoperationen Δϕ an, die notwendig sind, ausgehend von der Anfangslage der beiden Bilder BI1, BI2 zueinander, um einen Polygonzug PO1 mit einem mit ihm verglichenen Polygonzug PO2 zur Deckung zu bringen. Der Koordinatenursprung KOU entspricht dabei, der Anfangslage der beiden Bilder BI1, BI2 zueinander.

Wenn sich zwei Polygonzüge PO1, PO2 nach dem oben beschriebenen Kriterium der Berechnung der von ihnen eingeschlossenen Fläche FLA ähnlich sind, dann ist die erforderliche Rotations- Δϕ und Translationsoperation Δ*X*,Δ*Y*, um die beiden Polygonzüge PO1, PO2 miteinander zur Deckung zu bringen, die Matchhypothese dieses Paares für das gesamte Bild BI1, BI2. D. h. man müsste das ganze Bild BI1 der ermittelten Rotations- Δϕ bzw. Translationsoperation Δ*X*,Δ*Y* unterwerfen, welche den Polygonzug PO1 mit dem Polygonzug PO2 zur Deckung bringt, um die beiden Bilder BI1, BI2 ebenfalls zur Deckung zu bringen.

Man kann dies in Analogie zu einem Abstimmungsprozess sehen: Alle Paare von miteinander verglichenen Polygonzügen PO1, PO2 geben einen oder mehrere Stimmzettel mit ihrer Matchhypothese ab. Nach der Wahl, d. h. nach Vergleich aller Polygonzüge PO1, PO2 der beiden Bilder BI1, BI2 miteinander werden die Matchhypothesen bzw. die Punkte PUN ausgezählt und ermittelt ob es einen "Sieger" in Form eines Clusters CLU von Punkten PUN gibt. Die soeben beschriebene Vorgangsweise stellt im wesentlichen ein verallgemeinertes Hough-Verfahren dar.

Die Existenz einer oder mehrer Verdichtungen von Matchhypothesen bzw. Punkten PUN - im folgenden als Cluster CLU bezeichnet - identifiziert einen möglichen "Match", unter dem Begriff Match wird hier die jenige Kombination der Operationen Translation Δ*X*,Δ*Y* und Rotation Δϕ verstanden, die angewendet auf das erste Bild BI1, dieses in das zweite Bild BI2 überführen.

Das Zentrum ZEN des Clusters CLU bzw. dessen Lage in dem Raum RAU der möglichen Rotations- Δϕ und Translationsoperationen Δ*X*,Δ*Y* gibt die Parameter der Transformation an, welche die beiden Bilder BI1, BI2 ineinander überführt, während das Verhältnis der Dichte des Clusters CLU zu seiner Umgebung und der Reziprokwert seines Durchmessers DUR die Matchgüte angeben. Je größer der Reziprokwert des Durchmessers DUR ist desto größer ist die Matchgüte, d. h. desto größer ist die Sicherheit, dass die durch den Cluster CLU bestimmte Transformation die beiden Bilder BI1, BI2 ineinander überführt.

Bei identischen Bildern BI1, BI2 liegt der Reziprokwert des Durchmessers DUR eines Clusters CLU dessen Zentrum in dem Raum RAU eine Transformation definiert, welche die beiden Bilder BI1, BI2 ineinander überführt, und somit die Matchgüte bei unendlich.

Anhand der Güte des Clusters CLU kann somit die Ähnlichkeit der beiden Bilder miteinander eindeutig quantifiziert werden. Je höher die Güte des Clusters ist, desto ähnlicher sind sich die beiden Bilder - bei absolut identischen Bildern ist, wie soeben erwähnt, die Güte unendlich.

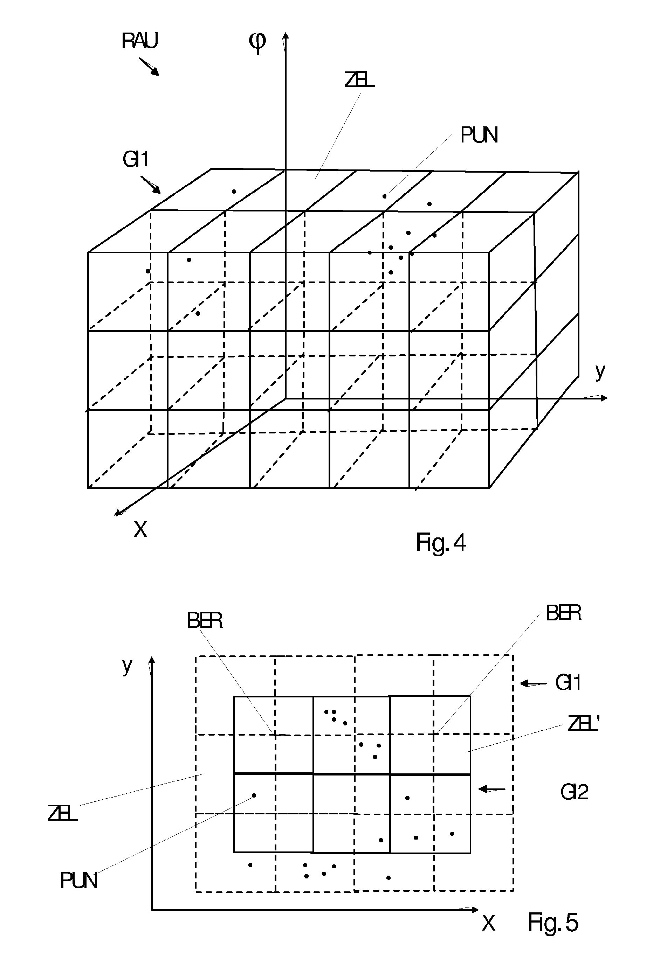

Gemäß Fig. 4 kann zur Bestimmung des Clusterzentrums der Raum RAU der möglichen Translationen Δ*X*,Δ*Y* und Rotationen Δϕ in ein Gitter GI1 von Elementarzellen ZEL, deren Kantenlängen empirische Parameter sind, welche die Fehlertoleranz bei der Bestimmung des Clusterzentrums festlegen, unterteilt werden. D. h. die Größe der Elementarzellen ZEL wird durch die geforderte Fehlertoleranz bestimmt.

Die Elementarzellen ZEL werden bevorzugterweise so gewählt, dass sie den Raum RAU lückenlos ausfüllen. Die Form der Elementarzellen ZEL kann dabei jede beliebige Form sein, welche dieser Randbedingung genügt. In der hier gezeigten Ausführungsform weisen die Elementarzellen ZEL eine quaderförmige Form auf.

Der Mittelpunkt der Elementarzelle ZEL, in welcher die meisten Punkte PUN liegen, kann dabei als Clusterzentrum angesehen werden. Es besteht jedoch die Möglichkeit, dass der Cluster CLU an einem Berührungspunkt BER von beispielsweise acht Elementarzellen ZEL, bei quaderförmigen Elementarzellen ZEL, liegt, sodass im Mittel auf jede der Elementarzellen ZEL nur ein Achtel der Gesamtmenge aller Punkte PUN dieses Clusters CLU entfällt. Bei einer anderen Form der Elementarzellen ZEL, beispielsweise als sechsseitiges Prisma entfällt auf jede der Elementarzellen ZEL ein Sechstel der Punkte PUN des Clusters CLU.

Um dem eben Gesagten zu entgegnen, kann nach Fig. 5 ein zweites Gitter GI2 von Elementarzellen ZEL' über das erste Gitter GI1 gelegt werden, sodass die Mittelpunkte der Elementarzellen ZEL' des zweiten Gitters GI2 genau in den Berührungspunkten BER der Elementarzellen ZEL des ersten Gitters GI1 zu liegen kommen. In dem zweiten Gitter GI2 wird ebenfalls die Elementarzelle ZEL' ermittelt, in welcher sich die meisten Punkte PUN befinden.

Zur Ermittlung des Clusters CLU der die höchste Dichte und Güte aufweist, werden die beiden Elementarzellen ZEL, ZEL', welche in ihrem jeweiligen Gitter GI1, GI2 die meisten Punkte PUN enthalten miteinander verglichen und die Ortskoordinaten bzw. die Lage des Mittelpunktes der Elementarzelle ZEL, welche die größere Anzahl von Punkten PUN enthält, in dem Raum RAU der möglichen Rotations- Δϕ und Translationsoperationen Δ*X*,Δ*Y* ermittelt.

Die Koordinaten bzw. die Lage des Mittelpunktes der Elementarzelle ZEL, ZEL' mit den meisten Punkten PUN kann dabei, wie bereits oben erwähnt als Lage des Clusterzentrums ZEN in dem Raum RAU angesehen werden.

Es ist ein Verdienst der Erfindung, sowohl Aussagen bezüglich der Ähnlichkeit von Untermengen - der Polygonzüge PO1, PO2-beider Bilder BI1, BI2 als auch der Bilder BI1, BI2 als Ganzes machen zu können.

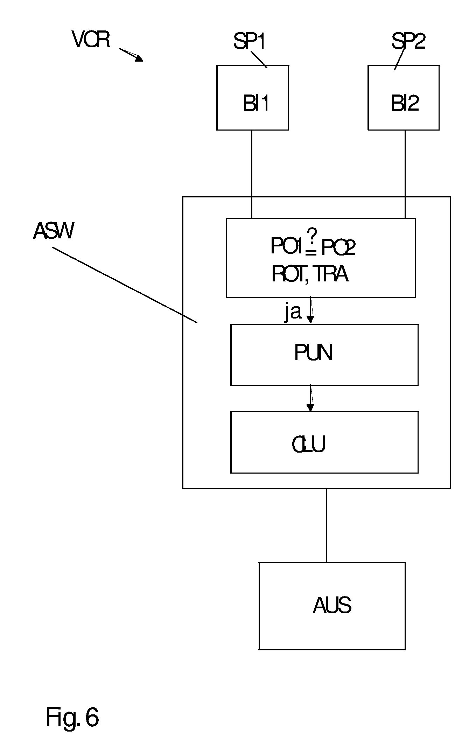

Nach Fig. 6 weist eine erfindungsgemäße Vorrichtung zum Ähnlichkeitsvergleich von der aus Polygonzügen PO1, PO2 aufgebauten, digitalen Bildern BI1, BI2, eine Auswerteeinheit ASW auf die dazu eingerichtet ist, die beiden digitalen Bilder BI1, BI2 miteinander zu vergleichen. Die beiden Bilder BI1, BI2 können in polygonalisierter Form je in einem Speicher SP1, SP2 abgelegt sein.

Die Auswerteeinheit ASW, beispielsweise ein entsprechend programmierter Mikroprozessor, ist dazu eingerichtet, auf die oben beschriebene Art die beiden Bilder BI1, BI2 miteinander zu vergleichen.

Das Ergebnis des Ähnlichkeitsvergleiches kann auf einer entsprechenden Ausgabeeinheit AUS, beispielsweise einem Bildschirm, dargestellt werden.

Die Vorrichtung VOR lässt sich beispielweise mit einem handelsüblichen PC, der entsprechend programmiert ist, realisieren. Geeignete Programmiersprachen und -methoden sind dem Fachmann in großer Zahl bekannt, beispielsweise C, C++ etc.

## Patentansprüche

1. Verfahren zum Ähnlichkeitsvergleich von zwei aus Polygonzügen (PO1, PO2) aufgebauten, digitalen Bildern (BI1, BI2),
**dadurch gekennzeichnet, dass** zur Bestimmung der Ähnlichkeit der beiden Bilder (BI1, BI2) jeder Polygonzug (PO1, PO2) des einen Bildes (BI1) mit jedem Polygonzug (PO1, PO2) des anderen Bildes (BI2) mittels Rotations- (Δϕ) und Translationsoperationen (Δ*X*,Δ*Y*) auf Deckungsgleichheit verglichen wird.

2. Verfahren nach Anspruch 1,
**dadurch gekennzeichnet, dass** untersucht wird, ob sich die Endpunkte (EP1, EP2) zumindest eines Polygonzuges (PO1) des ersten Bildes (BI1) mit den Endpunkten (EP1', EP2') zumindest eines Polygonzuges (PO2) des zweiten Bildes (BI2) im Rahmen einer vorgebbaren Abweichung mittels Rotations- (Δϕ) oder Translationsoperationen (Δ*X*,Δ*Y*) zur Deckung bringen lassen.

3. Verfahren nach Anspruch 2,
**dadurch gekennzeichnet, dass** der Betrag der Fläche (FLA), welche von zwei Polygonzügen (PO1, PO2) begrenzt wird, deren Endpunkte (EP1, EP1', EP2, EP2') miteinander zur Deckung gebracht sind, berechnet wird.

4. Verfahren nach Anspruch 3,
**dadurch gekennzeichnet, dass** der Betrag der Fläche (FLA) anhand der mittleren Länge (LAE) der beiden sie begrenzenden Polygonzüge (PO1, PO2) normiert wird.

5. Verfahren nach einem der Ansprüche 1 bis 4,
**dadurch gekennzeichnet, dass** jede Kombination von Rotations- (Δϕ) und Translationsoperationen (Δ*X*,Δ*Y*), die einen Polygonzug (PO1) des einen Bildes (BI1) mit einem Polygonzug (PO2) des anderen Bildes (BI2) im Rahmen einer vorgebbaren Abweichung zur Deckung bringen, aufgezeichnet wird.

6. Verfahren nach Anspruch 5,
**dadurch gekennzeichnet, dass** die aufgezeichneten Kombinationen von Translationen und Rotationen eine Untermenge bzw. Punkte (PUN) eines Raumes (RAU) von möglichen Rotations- (Δϕ) und Translationsoperationen (Δ*X*,Δ*Y*) bilden, wobei in dem Raum (RAU) der möglichen Rotations- (Δϕ) und Translationsoperationen (Δ*X*,Δ*Y*) nach Clustern (CLU) der Untermengen bzw. der Punkte (PUN) gesucht wird.

7. Verfahren nach Anspruch 6,
**dadurch gekennzeichnet, dass** zur Bestimmung eines Clusters (CLU) von Punkten (PUN) der Raum (RAU) der möglichen Rotations- (Δϕ) und Translationsoperationen (Δ*X*,Δ*Y*) in zumindest ein Gitter (GI1, GI2), bestehend aus Elementarzellen (ZEL, ZEL') mit vorgebbaren Volumen, unterteilt wird und diejenige Elementarzelle (ZEL, ZEL') bestimmt wird, in der sich die meisten Punkte (PUN) befinden.

8. Verfahren nach Anspruch 7,
**dadurch gekennzeichnet, dass** der Raum (RAU) der möglichen Rotations- (Δϕ) und Translationsoperationen (Δ*X*,Δ*Y*) in ein erstes Gitter (GI1) unterteilt wird und eine erste Elementarzelle (ZEL), in welcher sich die meisten Punkte (PUN) befinden, bestimmt wird, und dass der Raum (RAU) der möglichen Rotations- (Δϕ) und Translationsoperationen (*ΔX,ΔY*) in zweites Gitter (GI2) unterteilt wird, dessen Elementarzellen (ZEL') die gleiche Form und das gleiche Volumen wie die Elementarzellen (ZEL) des ersten Gitters (GI1) aufweisen, wobei der Mittelpunkt einer Elementarzelle (ZEL') des zweiten Gitters (GI2) in einem Berührungspunkt von zumindest sechs Elementarzellen (ZEL) des ersten Gitters (GI1) liegt und in dem zweiten Gitter (GI2) ebenfalls die Elementarzelle (ZEL') ermittelt wird, in welcher sich die meisten Punkte (PUN) befinden.

9. Verfahren nach Anspruch 8,
**dadurch gekennzeichnet, dass** die beiden Elementarzellen (ZEL, ZEL'), welche in ihrem jeweiligen Gitter (GI1, GI2) die meisten Punkte (PUN) enthalten miteinander verglichen werden und die Ortskoordinaten bzw. die Lage des Mittelpunktes der Elementarzelle (ZEL, ZEL'), welche die größere Anzahl von Punkten (PUN) enthält, in dem Raum (RAU) der möglichen Rotations- (Δϕ) und Translationsoperationen (*ΔX,ΔY*) ermittelt wird.

10. Verfahren nach einem der Ansprüche 6 bis 9,
**dadurch gekennzeichnet, dass** der größte Durchmesser (DUR) eines Clusters (CLU) bestimmt wird.

11. Verfahren nach einem der Ansprüche 6 bis 10,
**dadurch gekennzeichnet, dass** die Dichte der Punkte (PUN) in einem Cluster (CLU) bestimmt wird.

12. Vorrichtung zum Ähnlichkeitsvergleich von zwei aus Polygonzügen (PO1, PO2) aufgebauten, digitalen Bildern (BI1, BI2),
**dadurch gekennzeichnet, dass** sie dazu eingerichtet ist, zur Bestimmung der Ähnlichkeit der beiden Bilder (BI1, BI2) jeden Polygonzug (PO1) des einen Bildes (BI1) mit jedem Polygonzug (PO2) des anderen Bildes (BI2) mittels Rotations- (Δϕ) und Translationsoperationen (Δ*X*,Δ*Y*) auf Deckungsgleichheit zu vergleichen.

13. Vorrichtung nach Anspruch 12,
**dadurch gekennzeichnet, dass** sie dazu eingerichtet ist, zu untersuchen, ob sich die Endpunkte (EP1, EP2) zumindest eines Polygonzuges (PO1) des ersten Bildes (BI1) mit den Endpunkten (EP1', EP2') zumindest eines Polygonzuges (PO2) des zweiten Bildes (BI2) im Rahmen einer vorgebbaren Abweichung mittels Rotations- (Δϕ) oder Translationsoperationen (Δ*X*,Δ*Y*) zur Deckung bringen lassen.

14. Vorrichtung nach Anspruch 13,
**dadurch gekennzeichnet, dass** sie dazu eingerichtet ist, den Betrag der Fläche (FLA), welche von zwei Polygonzügen (PO1, PO2) begrenzt wird, deren Endpunkte (EP1, EP1', EP2, EP2') miteinander zur Deckung gebracht sind, zu berechnen.

15. Vorrichtung nach Anspruch 14,
**dadurch gekennzeichnet, dass** sie dazu eingerichtet ist, den Betrag der Fläche (FLA) anhand der mittleren Länge (LAE) der beiden sie begrenzenden Polygonzüge (PO1, PO2) zu normieren.

16. Vorrichtung nach einem der Ansprüche 12 bis 15,
**dadurch gekennzeichnet, dass** sie dazu eingerichtet ist, jede Kombination von Rotations- (Δϕ) und Translationsoperationen (Δ*X*,Δ*Y*), die einen Polygonzug (PO1) des einen Bildes (BI1) mit einem Polygonzug (PO2) des anderen Bildes (BI2) im Rahmen einer vorgebbaren Abweichung zur Deckung bringen, aufzuzeichnen.

17. Vorrichtung nach Anspruch 16,
**dadurch gekennzeichnet, dass** sie dazu eingerichtet ist, aus den aufgezeichneten Kombinationen von Translationen und Rotationen eine Untermenge bzw. Punkte (PUN) eines Raumes (RAU) von möglichen Rotations-(Δϕ) und Translationsoperationen (Δ*X*,Δ*Y*) zu bilden, und in dem Raum (RAU) der möglichen Rotations- (Δϕ) und Translationsoperationen (Δ*X*,Δ*Y*) nach Clustern (CLU) der Untermengen bzw. der Punkte (PUN) zu suchen.

18. Vorrichtung nach Anspruch 17,
**dadurch gekennzeichnet, dass** sie dazu eingerichtet ist, zur Bestimmung eines Clusters von Punkten (PUN) den Raum (RAU) der möglichen Rotations- (Δϕ) und Translationsoperationen (Δ*X*,Δ*Y*) in zumindest ein Gitter (GI1, GI2), bestehend aus Elementarzellen (ZEL, ZEL') mit vorgebbaren Volumen, zu unterteilen und diejenige Elementarzelle (ZEL, ZEL') zu bestimmen, in welcher sich die meisten Punkte (PUN) befinden.

19. Vorrichtung nach Anspruch 18,
**dadurch gekennzeichnet, dass** sie dazu eingerichtet ist, den Raum (RAU) der möglichen Rotations-(Δϕ) und Translationsoperationen (Δ*X*,Δ*Y*) in ein erstes Gitter (GI1) zu unterteilen und eine Elementarzelle (ZEL) dieses Gitters (GI1), in welcher sich die meisten Punkte (PUN) befinden, zu bestimmen, und dass sie weiters dazu eingerichtet ist, den Raum (RAU) der möglichen Rotations- (Δϕ) und Translationsoperationen (Δ*X*,Δ*Y*) in ein zweites Gitter (GI2) zu unterteilen, dessen Elementarzellen (ZEL') die gleiche Form und das gleiche Volumen wie die Elementarzellen (ZEL) des ersten Gitters (GI1) aufweisen, wobei der Mittelpunkt einer Elementarzelle (ZEL') des zweiten Gitters (GI2) in einem Berührungspunkt (BER) von zumindest sechs Elementarzellen (ZEL) des ersten Gitters (GI1) liegt und in dem zweiten Gitter (GI2) ebenfalls diejenige Elementarzelle (ZEL') zu ermitteln, in welcher sich die meisten Punkte (PUN) befinden.

20. Vorrichtung nach Anspruch 19,
**dadurch gekennzeichnet, dass** sie dazu eingerichtet ist, die beiden Elementarzellen (ZEL, ZEL'), welche in ihrem jeweiligen Gitter (GI1, GI2) die meisten Punkte (PUN) enthalten miteinander zu vergleichen und die Ortskoordinaten bzw. die Lage des Mittelpunktes derjenigen der beiden Elementarzellen (ZEL, ZEL'), welche die größere Anzahl von Punkten (PUN) enthält, in dem Raum (RAU) der möglichen Rotations- (Δϕ) und Translationsoperationen (Δ*X*,Δ*Y*) zu ermitteln.

21. Vorrichtung nach einem der Ansprüche 17 bis 20,
**dadurch gekennzeichnet, dass** sie dazu eingerichtet ist, den größten Durchmesser (DUR) eines Clusters (CLU) zu bestimmen.

22. Vorrichtung nach einem der Ansprüche 17 bis 21,
**dadurch gekennzeichnet, dass** sie dazu eingerichtet ist, die Dichte der Punkte (PUN) in einem Cluster (CLU) zu bestimmen.
